# EUROPÄISCHE PATENTSCHRIFT

(11) **EP 4 370 806 B1**
(45) Veröffentlichungstag und Bekanntmachung des Hinweises auf die Patenterteilung: **03.09.2025**
(21) Anmeldenummer: 22738661.2
(22) Anmeldetag: 04.07.2022
(51) Int. Cl.: F16B 7/04, G01D 11/30, G01D 21/00, F16B 35/04, F16B 2/06

(54) **FELDGERÄT MIT EINEM SENSOR ZUR ERFASSUNG EINER PHYSIKALISCHEN MESSGRÖSSE**
FIELD DEVICE WITH A SENSOR FOR DETECTING A PHYSICAL MEASUREMENT VARIABLE
APPAREIL DE TERRAIN DOTÉ D'UN CAPTEUR POUR LA DÉTECTION D'UNE GRANDEUR DE MESURE PHYSIQUE

(30) Priorität: 14.07.2021 DE 102021118265
(43) Veröffentlichungstag der Anmeldung: 22.05.2024
(73) Patentinhaber: Endress+Hauser Flowtec AG, 4153 Reinach (CH)
(72) Erfinder: LARSSON, Björn, 4127 Birsfelden (CH); RIMKUS, Philipp, 79540 Lörrach (DE)
(74) Vertreter: Endress + Hauser Group Services (Deutschland) AG+Co. KG
(86) Internationale Anmeldenummer: PCT/EP2022/068447
(87) Internationale Veröffentlichungsnummer: WO 2023/285190

(56) Entgegenhaltungen:
- DE-A1- 102004 006 381
- DE-A1- 102017 129 789
- DE-C- 590 969
- DE-U1- 202017 101 790

## Beschreibung

Die Erfindung betrifft Feldgerät mit einem Sensor zur Erfassung einer physikalischen Messgröße.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Sensorsysteme. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktorsysteme verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

Typischerweise weisen Feldgeräte ein aus Metall oder Kunststoff gefertigtes Gehäuse auf, in welches die Feldgeräteelektronik eingebracht ist. Weiterhin ist typischerweise eine Anzeigeeinheit auf das Feldgerätegehäuse angeschraubt. Des Weiteren weist ein Gehäuse eines Feldgerätes eine Öffnung zum Anschluss eines Sensorsystems auf, mit dessen Hilfe die Prozessgrößen erfasst werden.

Ein Sensorsystem ist aus Ex-Schutz-Gründen üblicherweise in einen zylinderförmigen Einsatz eingebracht, welcher in die Öffnung des Gehäuses eingebracht ist. Zur Verhinderung einer axialen Rotation des zylinderförmigen Einsatzes in dem Gehäuse des Feldgeräts, bzw. einer Rotation der des Gehäuses des Feldgeräts um die Längsachse des zylinderförmigen Einsatzes, wird der zylinderförmige Einsatz mit einem Sprengring am Gehäuse fixiert. Der zylinderförmige Einsatz ist danach lediglich um seine Längsachse rotierbar, was verwendet wird, um das Sensorsystem und/oder das Gehäuse in der Messstelle auszurichten.

Zum Fixieren des Sensorelements gegenüber unerwünschten Verdrehungen um die Längsachse des zylinderförmigen Einsatzes wird zum Beispiel ein Befestigungsmittel in Gestalt einer Schraube oder eines Keils verwendet, welches senkrecht oder parallel zur Längsachse des zylinderförmigen Einsatzes durch das Gehäuse geführt wird, um eine Druckkraft auf den zylinderförmigen Einsatz auszuüben und diesen dadurch zu fixieren. Ein Lösen und erneutes Fixieren des zylinderförmigen Einsatzes, beispielsweise um die Ausrichtung des Gehäuses des Feldgerätes zu ändern, ist nur unter Einsatz eines geeigneten Werkzeuges möglich. Häufig muss hierfür auch das Gehäuse des Feldgeräts geöffnet werden. Beispielsweise ist das Sensorelement fest in einer Rohrleitung oder in einem Behälter eingebracht. Der zylinderförmige Einsatz kann dann zwar nicht rotiert werden, allerdings kann der Bedarf bestehen, das Gehäuse des Feldgeräts zu drehen, um beispielsweise eine Anzeigeeinheit des Feldgeräts auf einen Bediener auszurichten.

Aus Fertigungs- und Kostengründen erweist es sich als vorteilhaft, Gehäuse von Feldgeräten aus Kunststoff zu fertigen. Da das Verwenden eines besagten Befestigungsmittels zum Verhindern von Verdrehungen des zylinderförmigen Einsatzes jedoch Spannungen auf das Gehäuse erzeugt, kann bei einem Kunststoffgehäuse Materialermüdung auftreten, was in einem Brechen oder Verformen des Kunststoffes resultiert und damit zu einer Undichtigkeit des Gehäuses führt.

Alternativ weisen sowohl die Öffnung des Gehäuses des Feldgeräts, als auch der zylinderförmige Einsatz ein Gewinde auf. Der zylinderförmige Einsatz wird derart in die Öffnung hineingedreht, bis der zylinderförmige Einsatz fest mit dem Gehäuse kontaktiert ist.

In beiden Varianten, bei dem in das Gehäuse geführten zylinderförmigen Einsatz und bei dem in das Gehäuse eingeschraubten zylinderförmigen Einsatz, sorgt eine Gummidichtung in Form eines O-Rings, welche sich zwischen den Auflageflächen des zylinderförmigen Einsatzes und des Gehäuses befindet, für die benötigte Haltekraft. Auf diese Art und Weise ist jedoch keine definierte Fixierung des zylinderförmigen Einsatzes erzielbar. Der Grad der Fixierung ist abhängig von dem Maße der hineingedrehten Gewindestrecke des zylinderförmigen Einsatzes. Das korrekte Einstellen der Fixierung erfordert eine genaue Abstimmung zwischen dem zylinderförmigen Einsatz und dem Gehäuse.

Aus der DE 10 2017 129 789 A1 ist ein Befestigungssystem für ein Sensorelement bekannt geworden, bei welchem ein Befestigungsring vorgesehen ist, welcher für die mechanische Klemmkraft zwischen Gehäuse und Sensorhals sorgt. Jedoch ist diese die Verbindung bspw. durch Vibrationen lösbar.

Ausgehend von dieser Problematik liegt der Erfindung die Aufgabe zugrunde, ein alternatives Befestigungssystem für ein Feldgerät vorzustellen, welches ein sicheres, einfaches und vibrationsstabiles Befestigen eines Sensorhalses eines Sensors an dem Gehäuse des Feldgeräts erlaubt.

Die Aufgabe wird durch ein Feldgerät gemäß Anspruch 1 gelöst. Hinsichtlich des Feldgeräts ist vorgesehen, dass dieses mit einem Sensor zur Erfassung einer physikalischen Messgröße ausgestattet ist und umfasst:
- ein Gehäuse mit einem rohrförmig ausgestalteten Abschnitt, wobei der rohrförmige Abschnitt eine Rotationsachse und einen ersten Durchmesser aufweist, wobei das Gehäuse ein Aufnahmeelement aufweist, welches tangential in einer Ebene normal zur Rotationsachse am rohrförmigen Abschnitt angeordnet ist;
- den Sensor, welcher einen im wesentlichen rohrförmigen Sensorhals mit einem zweiten Durchmesser aufweist, wobei der zweite Durchmesser kleiner als der erste Durchmesser ist, wobei der Sensorhals in den rohrförmigen Abschnitt des Gehäuses geführt ist,
- ein stiftförmiges rotationssymmetrisches Klemmelement mit einem ersten Endbereich, einem zweiten Endbereich, einem elastischen Bereich mit einem mittleren Durchmesser und einem Kontaktierungsbereich mit einem dritten Durchmesser, wobei der dritte Durchmesser größer als der mittlere Durchmesser ist, wobei der Kontaktierungsbereich zwischen dem ersten Endbereich und dem elastischen Bereich, zwischen dem elastischen Bereich und dem zweiten Endbereich, oder zwischen zwei Teilabschnitten des elastischen Bereichs angeordnet ist, wobei der zweite Endbereich ein Gewinde aufweist, und wobei das Aufnahmeelement zur Aufnahme des Klemmelements ausgestaltet ist und ein Gegengewinde zur Aufnahme des Gewindes des Klemmelements aufweist, wobei das Klemmelement dazu ausgestaltet ist, durch Einführen in das Aufnahmeelement und Eindrehen des Gewindes in das Gegengewinde in einer vorbestimmte ersten Tiefe mittels des Kontaktierungsbereichs eine Klemmkraft in radialer Richtung zwischen Aufnahmeelement und Sensorhals auszuüben, so dass sowohl eine Bewegung des Sensorhalses in dem rohrförmigen Abschnitt des Gehäuses in Richtung der Rotationsachse, als auch eine Rotation des Sensorhalses in dem rohrförmigen Abschnitt des Gehäuses um die Rotationsachse verhindert ist.

Das erfindungsgemäße Feldgerät weist somit einen Klemmmechanismus zum Befestigen des Sensorhalses an dem Gehäuse auf, welcher einfach und zuverlässig verwendbar ist. Durch Eindrehen des Gewindes des Klemmelements in das Gegengewinde des Aufnahmeelements wird der Kontaktierungsbereich zwischen die den Sensorhals und eine Wandung des Aufnahmeelements geschoben, so dass eine Verklemmung zwischen Sensorhals und Klemmelement erzielt wird. Die durch ein federähnliches Biegen des Klemmelements resultierende Klemmkraft ist so groß, dass sowohl ein Rotieren des Sensorhalses als auch ein axiales Verschieben des Sensorhalses in dem Gehäuse verhindert ist. Durch Verwenden der Gewindeverbindung zwischen Klemmelement und Aufnahmeelement ist das Klemmelement nicht spontan, beispielsweise durch Vibrationen, in tangentialer Richtung verschiebbar, so dass die Verklemmung zuverlässig auch über einen längeren Zeitraum besteht. Der elastische Bereich garantiert eine zuverlässige Funktion des Klemmmechanismus unabhängig der Umgebungstemperatur oder eventuellen Fertigungstoleranzen der verwendeten Komponenten. Sowohl die Dehnung im Klemmelement, als auch dessen Biegung wirken der Vibration entgegen.

Der "mittlere Durchmesser" des elastischen Bereichs bedeutet, dass der elastische Bereich nicht über dessen gesamte Länge denselben Durchmesser aufweisen muss, sondern auch eine Verdickung/Verjüngung mit beispielsweise linearem Verlauf aufweisen kann. Der mittlere Durchmesser ist der Mittelwert des Verlaufs des Durchmessers entlang der Länge des elastischen Bereichs.

Beispiele für Feldgeräte sind bereits im einleitenden Teil der Beschreibung aufgeführt worden. Die Erfindung eignet sich für alle Typen von Feldgeräten, bei welchen der Sensor einen in das Gehäuse des Feldgeräts eingeführten Sensorhals aufweist, beispielsweise Druckmessgeräte, Ultraschallmessgeräte, etc.

Gemäß einer vorteilhaften Ausgestaltung des erfindungsgemäßen Feldgeräts ist vorgesehen, dass das Klemmelement ein zwischen dem elastischen Bereich und dem ersten Endbereich angeordnetes erstes Führungselement aufweist, wobei das erste Führungselement einen vierten Durchmesser aufweist, und wobei der vierte Durchmesser größer oder gleich einem maximalen Durchmesser des elastischen Bereichs ist. Das erste Führungselement verhindert eine übermäßige Dehnung, bzw. Biegung des Klemmelements in Richtung des ersten Endbereichs. Dadurch, dass der elastische Bereich dünner als das erste Führungselement, erfolgt eine Biegung, bzw. Dehnung bevorzugt im elastischen Bereich.

Gemäß einer vorteilhaften Ausgestaltung des erfindungsgemäßen Feldgeräts ist vorgesehen, dass das Klemmelement ein zwischen dem elastischen Bereich und dem zweiten Endbereich angeordnetes zweites Führungselement aufweist, wobei das zweite Führungselement einen fünften Durchmesser aufweist, und wobei der fünfte Durchmesser größer oder gleich einem maximalen Durchmesser des elastischen Bereichs ist. Dadurch, dass der elastische Bereich somit im Wesentlichen dünner als das zweite Führungselement ist, erfolgt eine Biegung, bzw. Dehnung bevorzugt im elastischen Bereich.

Gemäß einer vorteilhaften Ausgestaltung des erfindungsgemäßen Feldgeräts ist vorgesehen, dass das Gewinde einen sechsten Durchmesser aufweist, und wobei der fünfte Durchmesser größer als der sechste Durchmesser ist. Eine Dehnung auf Höhe des zweiten Endbereichs, welche eine Belastung für das Gewinde darstellt, wird dadurch verhindert.

Gemäß einer vorteilhaften Ausgestaltung des erfindungsgemäßen Feldgeräts ist vorgesehen, dass das Aufnahmeelement abschnittsweise rohrförmig mit einem siebten Durchmesser ausgestaltet ist, wobei der siebte Durchmesser größer als der dritte Durchmesser, größer als der vierte Durchmesser und größer als der fünfte Durchmesser ist.

Gemäß einer vorteilhaften Ausgestaltung des erfindungsgemäßen Feldgeräts ist vorgesehen, dass der erste Endbereich ein Anschlagelement mit einem achten Durchmesser aufweist, wobei der achte Durchmesser größer als der siebte Durchmesser ist.

Durch diese Ausgestaltungen des siebten und des achten Durchmessers ist das Klemmelement einfach in das Aufnahmeelement einführbar, wobei zugleich eine Endposition des Klemmelements realisierbar ist. Die Länge des Klemmelements und/oder des Aufnahmeelements sind derart abgestimmt, dass das Gewinde bei Erreichen der Endposition des Klemmelements in dem Aufnahmeelement nicht überdreht wird.

Gemäß einer vorteilhaften Ausgestaltung des erfindungsgemäßen Feldgeräts ist vorgesehen, dass das Anschlagelement eine Aufnahme zur Drehmomentübertragung, insbesondere mittels eines Schraubendrehers oder eines Inbus-, Außensechskant- oder Torxschlüssels, aufweist. Hierdurch wird ein Eindrehen des Klemmelements erleichtert. Auch die Verwendung alternativer Schraubenprofile ist denkbar.

Gemäß einer vorteilhaften Ausgestaltung des erfindungsgemäßen Feldgeräts ist vorgesehen, dass der Sensorhals auf der nach außen gerichteten Seite eine umlaufende Nut aufweist, wobei Bereiche des Sensorhalses oberhalb und unterhalb der Nut ausgestaltet ist, den Kontaktierungsbereich des Klemmelements nach Einführen des Klemmelements in das Aufnahmeelement aufzunehmen, so dass eine Bewegung des Sensorhalses in dem rohrförmigen Abschnitt des Gehäuses in Richtung der Rotationsachse verhindert ist, wobei das Gewinde in eine vorstimmte zweite Tiefe in das Gegengewinde eingedreht ist, wobei die erste vorbestimmte Tiefe tiefer als die zweite vorbestimmte Tiefe ist. Das Klemmelement befindet sich also in einer Einstellung, in welcher der Sensorhals in dem Gehäuse drehbar, bzw. rotierbar ist.

Gemäß einer vorteilhaften Ausgestaltung des erfindungsgemäßen Feldgeräts ist vorgesehen, dass der rohrförmige Abschnitt des Gehäuses an der Innenseite zumindest zwei Auflageflächen, insbesondere ausgestaltet als Stege oder Rippen aufweist, wobei die Auflageflächen jeweils auf einem Bereich des Sensorhalses oberhalb und unterhalb der Nut aufliegen, wobei die Auflageflächen auf einem Umkreis des rohrförmigen Abschnitts im einem Abstand von 120 ° zueinander beabstandet sind.

Gemäß einer vorteilhaften Ausgestaltung des erfindungsgemäßen Feldgeräts ist vorgesehen, dass die Auflageflächen derart ausgestaltet sind, dass zwei der Auflageflächen bei Ausüben der Klemmkraft in radialer Richtung zwischen dem Aufnahmeelement und dem Sensorhals jeweils eine radiale Klemmkraft zwischen dem rohrförmigen Abschnitt des Gehäuses und des Sensorhalses ausüben.

Die Auflageflächen dienen daher zwei Funktionen: Zum einen, eine Verkippung des Sensorhalses in dem Gehäuse zu verhindern, wenn sich das Klemmelement in der Einstellung befindet, in welcher der Sensorhals nicht rotierbar in dem Gehäuse ist. Zum anderen dienen die Auflageflächen einer Verteilung der Klemmkraft auf mehrere Elemente, also auf zwei der Auflageflächen und auf den Kontaktierungsbereich des Klemmelements. Gegenüber der Variante, bei welcher die Klemmkraft ausschließlich über den Kontaktierungsbereich des Klemmelements auf den Sensorhals wirkt, ist die Stabilität der Befestigung erhöht, sowie die Belastung auf die einzelnen Komponenten reduziert.

Die Auflageflächen definieren hierbei den ersten Durchmesser. Es muss beachtet werden, dass der zweite Durchmesser des Sensorhalses so gewählt ist, dass er kleiner als der erste Durchmesser ist.

Gemäß einer vorteilhaften Ausgestaltung des erfindungsgemäßen Feldgeräts ist vorgesehen, dass der Sensorhals unterhalb des Bereiches, auf welchem die Auflageflächen aufliegen, einen Durchmesser kleiner als der zweite Durchmesser aufweist. Dadurch wird verhindert, dass der Sensorhals in diesem Bereich in den rohrförmigen Abschnitt eingeklemmt wird, sollte es während des Etablierens der Klemmkraft mittels des Klemmelements zu einer leichten temporären Verkippung kommen.

Gemäß einer vorteilhaften Ausgestaltung des erfindungsgemäßen Feldgeräts ist vorgesehen, dass das Klemmelement aus einem metallischen Material oder aus einem Kunststoff, insbesondere aus einem faser- oder kugelverstärkten Kunststoff, gefertigt ist.

Gemäß einer vorteilhaften Ausgestaltung des erfindungsgemäßen Feldgeräts ist vorgesehen, dass das Gehäuse aus einem Metall, insbesondere Aluminium oder ein rostfreier Stahl, oder aus einem Kunststoff gefertigt ist.

Die Erfindung wird anhand der nachfolgenden Figuren näher erläutert. Es zeigen
Fig. 1: ein Ausführungsbeispiel des erfindungsgemäßen Feldgeräts;
Fig. 2: ein Querschnitt durch das Klemmsystem in zwei Positionen
Fig. 3: eine Ausgestaltung des Sensorhalses; und
Fig. 4: eine Ausgestaltung des rohrförmigen Abschnitts des Gehäuses.

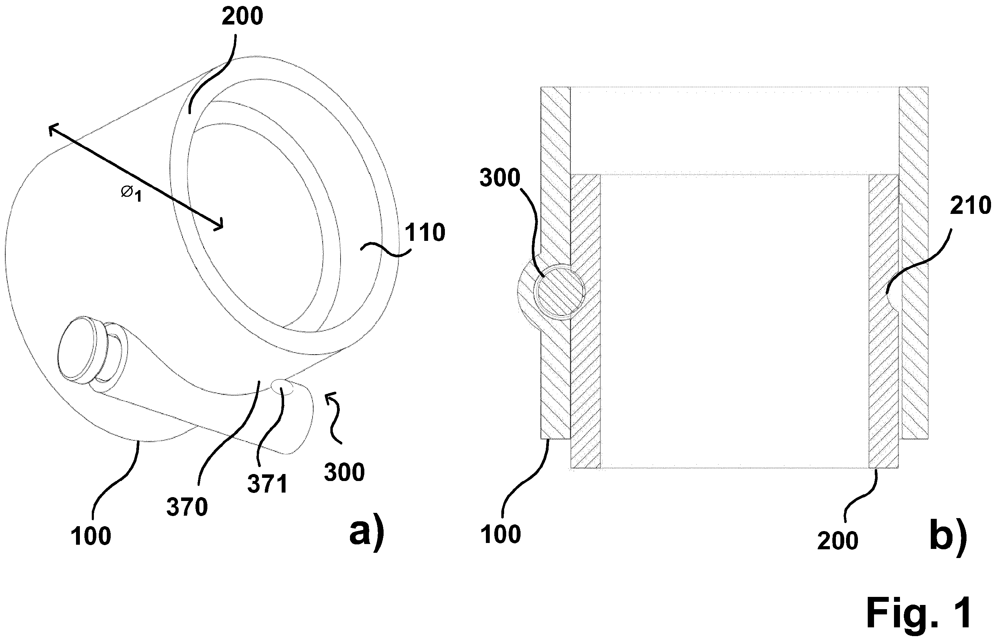

In Fig. 1 ist ein Ausführungsbeispiel des erfindungsgemäßen Feldgeräts gezeigt. Hierbei ist ein rohrförmiger Abschnitt 100 des Gehäuses 1 des Feldgeräts, sowie ein Abschnitt des in das Gehäuse eingeführten Sensorhalses 200 abgebildet. Fig. 1a) zeigt hierbei eine Außenansicht, Fig. 1b) einen Längsschnitt durch das Feldgerät.

Das Feldgerät dient zum Erfassen einer physikalischen Messgröße, bspw. betreffend einen verfahrenstechnischen Prozess. Zu diesem Zweck weist das Messgerät den Sensor auf. Beispielsweise handelt es sich bei dem Sensor um einen Druck- oder Ultraschallsensor. Das Gehäuse 1 des Feldgeräts weist die Elektronik des Feldgeräts, Verkabelungen, Schnittstellen, Anzeigeelemente und/oder Eingabeelemente auf. Das Gehäuse besteht typischerweise aus einem Metall, insbesondere Aluminium oder ein rostfreier Stahl, oder aus einem Kunststoff.

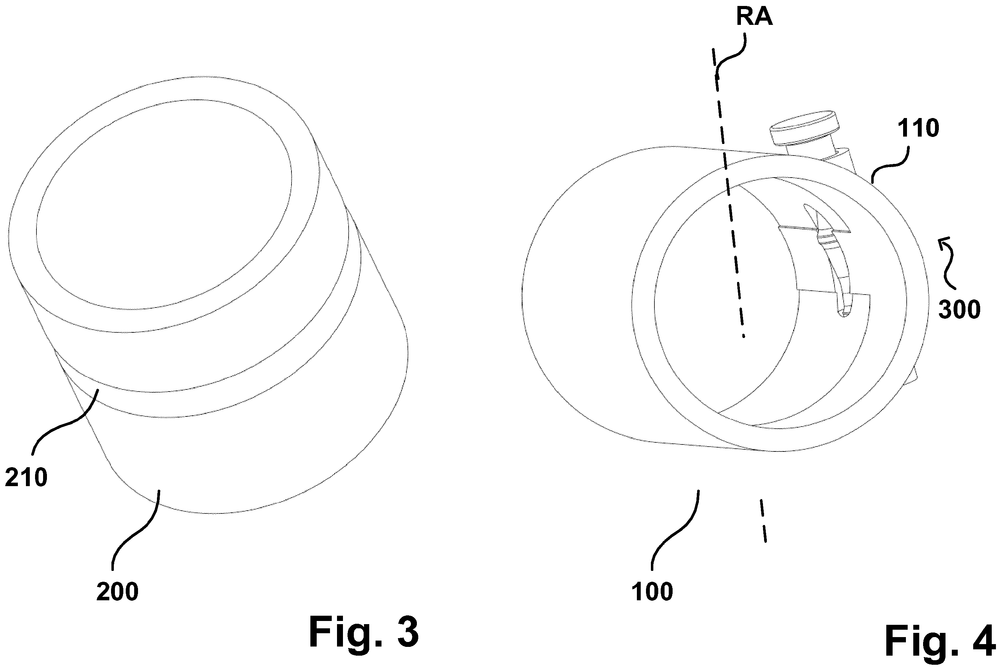

Zum Befestigen des Sensors an dem Gehäuse 1 des Feldgeräts, wird der Sensorhals 200 des Sensors in den rohrförmigen Abschnitt 100 des Gehäuses 1 eingeführt. Der Sensorhals 200 ist in Fig. 3 abgebildet. Dieser besteht insbesondere aus einem metallischen Material, ist zylinderförmig mit einem zweiten Durchmesser ⌀₂ ausgestaltet und weist eine umlaufende, zirkuläre Nut 210 auf. Der zweite Durchmesser ø₂ ober- und/oder unterhalb der Nut. Die Bereiche ober- und unterhalb der Nut können auch verschiedene Durchmesser aufweisen, jedoch nicht größer als der erste Durchmesser ø₁.

Der rohrförmige Abschnitt 100 des Gehäuses 1 weist einen ersten Querschnitt ⌀₁ auf. In einer tangentialen Ebene des rohrförmigen Abschnitts 100 ist ein Aufnahmeelement 110 angebracht. Dieses besteht in seiner Grundform aus einem Röhrchen mit einem siebten Durchmesser ⌀₇. Das Aufnahmeelement 110 ist derart geformt, dass dieses zur Innenseite des rohrförmigen Abschnitts geöffnet ist. Verdeutlicht ist dies in Fig. 4, welches den rohrförmigen Abschnitt 100 ohne den eingeführten Sensorhals zeigt.

Zum Fixieren des Sensorhalses 200 in dem rohrförmigen Abschnitt 100 wird ein Klemmelement 300 in das Aufnahmeelement 110 eingeführt. Das Klemmelement 110 ist stiftförmig und rotationssymmetrisch ausgestaltet und weist einen ersten Endbereich 310 und einen zweiten Endbereich 320 auf. Am zweiten Endbereich 320 ist ein Gewinde mit einem sechsten Durchmesser ⌀₆ angebracht, welche in ein Gegengewinde des Aufnahmeelements 110 gedreht wird. Der erste Endbereich 310 weist ein Anschlagelement 370 mit einem achten Durchmesser ⌀₈ auf, wobei ⌀₈ größer ⌀₇, welches eine Endposition des Klemmelements 300 in dem Aufnahmeelement 110 festlegt.

Das Klemmelement 340 weist einen Kontaktierungsbereich 340 mit einem dritten Durchmesser ⌀₃ auf. Der Kontaktierungsbereich 340 ragt durch die Öffnung des Aufnahmeelements 110 und des rohrförmigen Abschnitts 100 in den Innenraum des Gehäuses und kontaktiert die Nut 210 des Sensorhalses.

Wird das Gewinde des Klemmelements 300 weiter in das Gegengewinde des Aufnahmeelements 110 gedreht, so bewegt sich das Klemmelement 300 in tangentialer Richtung zum Sensorhals 200. Das Anschlagelement 370 weist eine Aufnahme zur Drehmomentübertragung 371, welche bspw. die Aufnahme eines Schraubendrehers oder eines Inbusschlüssels erlaubt.

Das Klemmelement erfährt eine leichte Dehnung, durch die zunehmende Federkraft des Klemmelements 300, fortan als Klemmkraft bezeichnet, drückt der Kontaktierungsbereich 340 sukzessive stärker auf den Sensorhals 200. Um diesen Effekt unabhängig von der Temperatur und etwaigen Fertigungstoleranzen erzielen zu können, weist das Klemmelement 300 einen elastischen Bereich 330 auf, welcher einen mittleren Durchmesser aufweist, welcher kleiner als der dritte Durchmesser ⌀₃ ist. Damit die Dehnung bevorzugt in diesem elastischen Bereich 340 bewirkt wird, weist das Klemmelement ein erstes Führungselement 350 mit einem vierten Durchmesser ⌀₄, angeordnet zwischen dem elastischen Bereich 330 und dem ersten Endbereich 310, sowie ein zweites Führungselement 360 mit einem Durchmesser ⌀₅, angeordnet zwischen dem elastischen Bereich 330 und dem zweiten Endbereich 320 auf. Der vierte und der fünfte Durchmesser ⌀₄, ⌀₅ müssen hierfür jeweils größer als der dritte Durchmesser sein. Vorteilhafterweise besteht das Klemmelement 300 aus einem metallischen Material oder aus einem Kunststoff, insbesondere aus einem faser- oder kugelverstärkten Kunststoff.

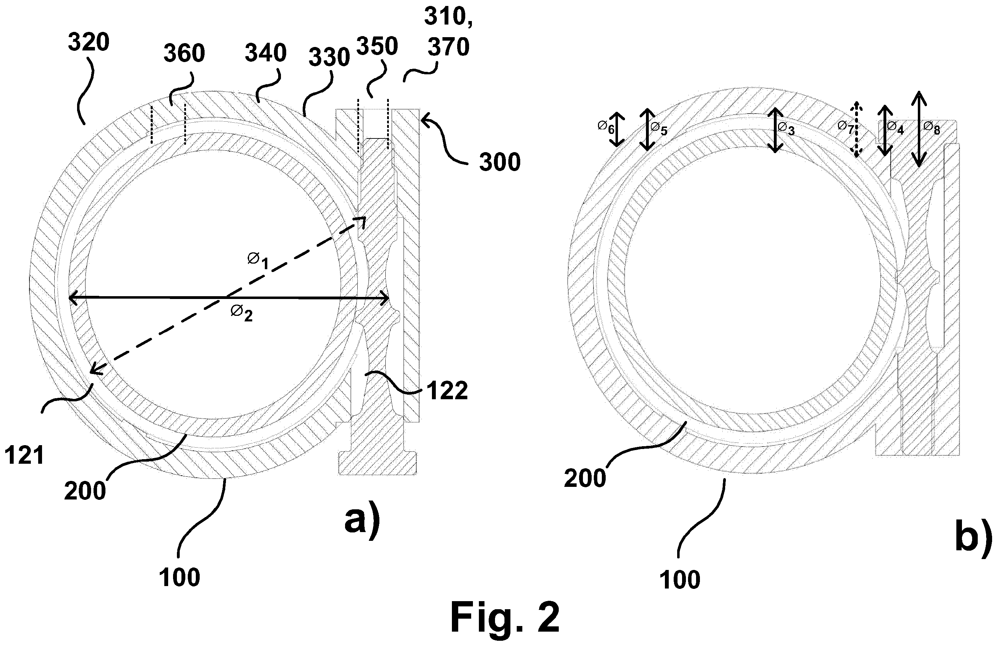

Ist die Klemmkraft groß genug, so ist ein Verschieben des Sensorhalses 200 gegenüber dem rohrförmigen Abschnitt 100, sowie ein Rotieren des Sensorhalses 200 um seine Längsachse verhindert, siehe Fig. 2b).

Da der Kontaktierungsbereich 340 derart ausgestaltet ist, dass dieser in die Nut 210 einführbar ist, ist ein Verschieben des Sensorhalses 200 gegenüber dem rohrförmigen Abschnitt 100 bereits in einer Position des Klemmelements 300 in dem Aufnahmeelement 110 verhindert, wenn keine oder nur eine geringe Klemmkraft anliegt, siehe Fig. 2a). In diesem Zustand ist der Sensorhals 200 jedoch um seine Längsachse rotierbar, was beispielsweise zur Ausrichtung des Sensors verwendet wird.

Aus Stabilitätsgründen weist der rohrförmige Abschnitt 2, bevorzugt 3 Aufnahmeflächen 121, 122 in Form von Pins oder Noppen auf. Diese Pins, bzw. Noppen sind so ausgestaltet, dass diese im Bereich ober- und/oder unterhalb der Nut auf dem Sensorhals 200 aufliegen. Die Auflageflächen 121, 122 dienen im Wesentlichen zwei Funktionen: Zum einen, eine Verkippung des Sensorhalses 200 in dem rohrförmigen Abschnitt 100 zu verhindern, zum anderen eine Verteilung der Klemmkraft auf den Sensorhals 200 zu verteilen.

Die erfindungsgemäße Befestigungsmethode erlaubt es, den Sensorhals 200 einfach und sehr zuverlässig an dem rohrförmigen Abschnitt 100 zu fixieren. Die Befestigung ist vibrationsbeständig und dennoch jederzeit durch Herausdrehen des Klemmelements 300 lösbar.

### Bezugszeichenliste

- 1: Gehäuse
- 100: rohrförmiger Abschnitt des Gehäuses
- 110: Aufnahmeelement
- 121,122: Aufnahmeflächen
- 200: Sensorhals
- 210: Nut
- 300: Klemmelement
- 310: erster Endbereich
- 320: zweiter Endbereich
- 330: elastischer Bereich
- 340: Kontaktierungsbereich
- 350: erstes Führungselement
- 360: zweites Führungselement
- 370: Anschlagelement
- 371: Aufnahme zur Drehmomentübertragung
- ⌀₁, ..., ⌀₈: Durchmesser

## Patentansprüche

1. Feldgerät mit einem Sensor zur Erfassung einer physikalischen Messgröße, umfassend:
- ein Gehäuse (1) mit einem rohrförmig ausgestalteten Abschnitt (100), wobei der rohrförmige Abschnitt (100) eine Rotationsachse (RA) und einen ersten Durchmesser (⌀₁) aufweist, wobei das Gehäuse (1) ein Aufnahmeelement (110) aufweist, welches tangential in einer Ebene normal zur Rotationsachse (RA) am rohrförmigen Abschnitt (100) angeordnet ist;
- den Sensor, welcher einen im wesentlichen rohrförmigen Sensorhals (200) mit einem zweiten Durchmesser (⌀₂) aufweist, wobei der zweite Durchmesser (⌀₂) kleiner als der erste Durchmesser (⌀₁) ist, wobei der Sensorhals (200) in den rohrförmigen Abschnitt (100) des Gehäuses (1) geführt ist,
- ein stiftförmiges rotationssymmetrisches Klemmelement (300) mit einem ersten Endbereich (310), einem zweiten Endbereich (320), einem elastischen Bereich (330) mit einem mittleren Durchmesser und einem Kontaktierungsbereich (340) mit einem dritten Durchmesser (ø₃),
- wobei der dritte Durchmesser (⌀₃) größer als der mittlere Durchmesser ist, wobei der Kontaktierungsbereich (340) zwischen dem ersten Endbereich (310) und dem elastischen Bereich (330), zwischen dem elastischen Bereich (330) und dem zweiten Endbereich (320), oder zwischen zwei Teilabschnitten des elastischen Bereichs (330) angeordnet ist,
- wobei der zweite Endbereich (320) ein Gewinde aufweist,
- und wobei das Aufnahmeelement (110) zur Aufnahme des Klemmelements (300) ausgestaltet ist und ein Gegengewinde zur Aufnahme des Gewindes des Klemmelements (300) aufweist, wobei das Klemmelement (300) dazu ausgestaltet ist, durch Einführen in das Aufnahmeelement (110) und Eindrehen des Gewindes in das Gegengewinde in einer vorbestimmte ersten Tiefe mittels des Kontaktierungsbereichs (340) eine Klemmkraft in radialer Richtung zwischen Aufnahmeelement (110) und Sensorhals (200) auszuüben, so dass sowohl eine Bewegung des Sensorhalses (200) in dem rohrförmigen Abschnitt (100) des Gehäuses (1) in Richtung der Rotationsachse (RA), als auch eine Rotation des Sensorhalses (200) in dem rohrförmigen Abschnitt (100) des Gehäuses (1) um die Rotationsachse (RA) verhindert ist.

2. Feldgerät nach Anspruch 1, wobei das Klemmelement (300) ein zwischen dem elastischen Bereich (330) und dem ersten Endbereich (310) angeordnetes erstes Führungselement (350) aufweist, wobei das erste Führungselement (350) einen vierten Durchmesser (⌀₄) aufweist, und wobei der vierte Durchmesser (⌀₄) größer oder gleich einem maximalen Durchmesser des elastischen Bereichs (330) ist.

3. Feldgerät nach Anspruch 1 oder 2, wobei das Klemmelement (300) ein zwischen dem elastischen Bereich (330) und dem zweiten Endbereich (320) angeordnetes zweites Führungselement (360) aufweist, wobei das zweite Führungselement (360) einen fünften Durchmesser (⌀₅) aufweist, und wobei der fünfte Durchmesser (⌀₅) größer oder gleich einem maximalen Durchmesser des elastischen Bereichs (330) ist.

4. Feldgerät nach Anspruch 3, wobei das Gewinde einen sechsten Durchmesser (⌀₆) aufweist, und wobei der fünfte Durchmesser (⌀₅) größer als der sechste Durchmesser (⌀₆) ist.

5. Feldgerät nach zumindest einem der vorherigen Ansprüche, wobei das Aufnahmeelement (110) abschnittsweise rohrförmig mit einem siebten Durchmesser (⌀₇) ausgestaltet ist, wobei der siebte Durchmesser (⌀₇) größer als der dritte Durchmesser (⌀₃), größer als der vierte Durchmesser (⌀₄) und größer als der fünfte Durchmesser (⌀₅) ist.

6. Feldgerät nach Anspruch 5, wobei der erste Endbereich (310) ein Anschlagelement (370) mit einem achten Durchmesser (⌀₈) aufweist, wobei der achte Durchmesser (⌀₈) größer als der siebte Durchmesser (⌀₇) ist.

7. Feldgerät nach Anspruch 6, wobei das Anschlagelement (370) eine Aufnahme (371) zur Drehmomentübertragung, insbesondere mittels eines Schraubendrehers oder eines Inbus-, Außensechskant- oder Torxschlüssels, aufweist.

8. Feldgerät nach zumindest einem der vorherigen Ansprüche, wobei der Sensorhals (200) auf der nach außen gerichteten Seite eine umlaufende Nut (210) aufweist, wobei die Nut (210) ausgestaltet ist, den Kontaktierungsbereich (340) des Klemmelements (300) nach Einführen des Klemmelements (300) in das Aufnahmeelement (110) aufzunehmen, so dass eine Bewegung des Sensorhalses (200) in dem rohrförmigen Abschnitt (100) des Gehäuses (1) in Richtung der Rotationsachse (RA) verhindert jedoch eine Rotation des Sensorhalses (200) in dem rohrförmigen Abschnitt (100) des Gehäuses (1) um die Rotationsachse (RA) ermöglicht ist, wobei das Gewinde in eine vorstimmte zweite Tiefe in das Gegengewinde eingedreht ist, wobei die erste vorbestimmte Tiefe tiefer als die zweite vorbestimmte Tiefe ist.

9. Feldgerät nach Anspruch 8, wobei der rohrförmige Abschnitt (100) des Gehäuses (1) in der Innenseite zumindest zwei Auflageflächen (121,122), insbesondere ausgestaltet als Stege oder Rippen, aufweist, wobei die Auflageflächen (121, 122) jeweils auf einem Bereich des Sensorhalses (200) oberhalb und unterhalb der Nut aufliegen, wobei die Auflageflächen (121,122) auf einem Umkreis des rohrförmigen Abschnitts (100) im einem Abstand von 120° zueinander beabstandet sind.

10. Feldgerät nach Anspruch 9, wobei die Auflageflächen derart ausgestaltet sind, dass zwei der Auflageflächen (121,122) bei Ausüben der Klemmkraft in radialer Richtung zwischen dem Aufnahmeelement (110) und dem Sensorhals (200) jeweils eine radiale Klemmkraft zwischen dem rohrförmigen Abschnitt (100) des Gehäuses (1) und des Sensorhalses (200) ausüben.

11. Feldgerät nach einem der Ansprüche 8 bis 10, wobei der Sensorhals (200) unterhalb des Bereiches, auf welchem die Auflageflächen (121, 122) aufliegen, einen Durchmesser kleiner als der zweite Durchmesser (⌀₂) aufweist.

12. Feldgerät nach zumindest einem der vorherigen Ansprüche, wobei das Klemmelement (300) aus einem metallischen Material oder aus einem Kunststoff, insbesondere aus einem faser- oder kugelverstärkten Kunststoff, gefertigt ist.

13. Feldgerät nach zumindest einem der vorherigen Ansprüche, wobei das Gehäuse (1) aus einem Metall, insbesondere Aluminium oder ein rostfreier Stahl, oder aus einem Kunststoff gefertigt ist.

## Claims

1. Field device with a sensor for recording a physical measured variable, comprising:
- a housing (1) with a tubular section (100), wherein the tubular section (100) has a rotary axis (RA) and a first diameter (⌀₁), wherein the housing (1) has a supporting element (110), which is arranged tangentially in a plane perpendicular to the rotary axis (RA) on the tubular section (100);
- the sensor, which has an essentially tubular sensor neck (200) with a second diameter (⌀₂), wherein the second diameter (⌀₂) is smaller than the first diameter (ø₁), wherein the sensor neck (200) is guided into the tubular section (100) of the housing (1),
- a pin-shaped, axially symmetric clamping element (300) with a first end area (310), a second end area (320), an elastic area (330) with an average diameter and a contacting area (340) with a third diameter (⌀₃),
- wherein the third diameter (⌀₃) is larger than the average diameter, wherein the contacting area (340) is located between the first end area (310) and the elastic area (330), between the elastic area (330) and the second end area (320), or between two partial sections of the elastic area (330),
- wherein the second end area (320) has a thread,
- and wherein the supporting element (110) is designed to support the clamping element (300) and has a mating thread for holding the thread of the clamping element (300), wherein the clamping element (300) is designed to exert a clamping force in the radial direction between the supporting element (110) and sensor neck (200) through insertion into the supporting element (110) and by screwing the thread into the mating thread to a predefined first depth using the contacting area (340), so that both a movement of the sensor neck (200) in the tubular section (100) of the housing (1) toward the rotary axis (RA) and a rotation of the sensor neck (200) in the tubular section (100) of the housing (1) around the rotary axis (RA) is prevented.

2. Field device as claimed in claim 1, wherein the clamping element (300) has a first guide element (350) located between the elastic area (330] and the first end area (310), wherein the first guide element (350) has a fourth diameter (⌀₄), and wherein the fourth diameter (⌀₄) is larger than or equal to a maximum diameter of the elastic area (330).

3. Field device as claimed in claim 1 or 2, wherein the clamping element (300) has a second guide element (360) located between the elastic area (330) and the second end area (320), wherein the second guide element (360) has a fifth diameter (⌀₅), and wherein the fifth diameter (⌀₅) is larger than or equal to a maximum diameter of the elastic area (330).

4. Field device as claimed in claim 3, wherein the thread has a sixth diameter (⌀₆), and wherein the fifth diameter (⌀₅) is larger than the sixth diameter (⌀₆).

5. Field device as claimed in at least one of the preceding claims, wherein the supporting element (110) is tubular in sections with a seventh diameter (⌀₇), wherein the seventh diameter (⌀₇) is larger than the third diameter (⌀₃), larger than the fourth diameter (⌀₄) and larger than the fifth diameter (⌀₅).

6. Field device as claimed in claim 5, wherein the first end area (310) has a stop element (370) with an eighth diameter (⌀₈), wherein the eighth diameter (⌀₈) is larger than the seventh diameter (⌀₇).

7. Field device as claimed in claim 6, wherein the stop element (370) has a support (371) for torque transmission, in particular by means of a screwdriver or an Allen, hexagon or torx wrench.

8. Field device as claimed in at least one of the preceding claims, wherein the sensor neck (200) on the outward-facing side has a circumferential groove (210), wherein the groove (210) is designed to support the contacting area (340) of the clamping element (300) following insertion of the clamping element (300) into the supporting element (110), so that a movement of the sensor neck (200) in the tubular section (100) of the housing (1) toward the rotary axis (RA) is prevented, however a rotation of the sensor neck (200) in the tubular section (100) of the housing (1) around the rotary axis (RA) is enabled, wherein the thread is screwed into the mating thread to a predefined second depth, wherein the first predefined depth is deeper than the second predefined depth.

9. Field device as claimed in claim 8, wherein the tubular section (100) of the housing (1) on the inside has at least two contact surfaces (121,122), in particular designed as bars or ribs, wherein the contact surfaces (121, 122) each touch an area of the sensor neck (200) above and below the groove, wherein the contact surfaces (121,122) are arranged along a circumference of the tubular section (100) at a distance of 120° to one another.

10. Field device as claimed in claim 9, wherein the contact surfaces are designed such that two of the contact surfaces (121,122) each exert a radial clamping force between the tubular section (100) of the housing (1) and the sensor neck (200) upon exertion of the clamping force in the radial direction between the supporting element (110) and the sensor neck (200).

11. Field device as claimed in one of claims 8 to 10, wherein the sensor neck (200) below the area on which the contact surfaces (121, 122) lie has a diameter smaller than the second diameter (⌀₂).

12. Field device as claimed in at least one of the preceding claims, wherein the clamping element (300) is made from a metallic material or from a plastic, in particular from a fiber- or bead-reinforced plastic.

13. Field device as claimed in at least one of the preceding claims, wherein the housing (1) is made from a metal, in particular aluminum or a stainless steel, or from a plastic.

## Revendications

1. Appareil de terrain avec un capteur destiné à la mesure d'une grandeur de mesure physique, lequel appareil comprend :
- un boîtier (1) présentant une section tubulaire (100), la section tubulaire (100) présentant un axe de rotation (RA) et un premier diamètre (Ø₁), le boîtier (1) présentant un élément de réception (110) disposé tangentiellement à la section tubulaire (100) dans un plan normal à l'axe de rotation (RA) ;
- le capteur, lequel présente un col de capteur (200) pour l'essentiel tubulaire et lequel présente un deuxième diamètre (Ø₂), le deuxième diamètre (Ø₂) étant plus petit que le premier diamètre (Ø₁), le col de capteur (200) étant guidé dans la section tubulaire (100) du boîtier (1),
- un élément de serrage (300) en forme de broche et à symétrie de rotation, lequel élément comprend une première zone d'extrémité (310), une deuxième zone d'extrémité (320), une zone élastique (330) présentant un diamètre moyen et une zone de contact (340) présentant un troisième diamètre (Ø₃),
- le troisième diamètre (Ø₃) étant supérieur au diamètre moyen, la zone de contact (340) étant disposée entre la première zone d'extrémité (310) et la zone élastique (330), entre la zone élastique (330) et la deuxième zone d'extrémité (320), ou entre deux sections partielles de la zone élastique (330),
- la deuxième zone d'extrémité (320) présentant un filetage,
- et l'élément de réception (110) étant conçu pour recevoir l'élément de serrage (300) et lequel élément présentant un contre-filet pour recevoir le filetage de l'élément de serrage (300), l'élément de serrage (300) étant conçu pour exercer une force de serrage dans la direction radiale entre l'élément de réception (110) et le col de capteur (200) en l'introduisant dans l'élément de réception (110) et en vissant le filetage dans le contre-filet à une première profondeur prédéterminée au moyen de la zone de contact (340), de sorte qu'aussi bien un mouvement du col de capteur (200) dans la section tubulaire (100) du boîtier (1) en direction de l'axe de rotation (RA) qu'une rotation du col de capteur (200) dans la section tubulaire (100) du boîtier (1) autour de l'axe de rotation (RA) sont empêchés.

2. Appareil de terrain selon la revendication 1, pour lequel l'élément de serrage (300) comprend un premier élément de guidage (350) disposé entre la zone élastique (330) et la première zone d'extrémité (310), le premier élément de guidage (350) présentant un quatrième diamètre (Ø₄) et le quatrième diamètre (Ø₄) étant supérieur ou égal à un diamètre maximal de la zone élastique (330).

3. Appareil de terrain selon la revendication 1 ou 2, pour lequel l'élément de serrage (300) présente un deuxième élément de guidage (360) disposé entre la zone élastique (330) et la deuxième zone d'extrémité (320), le deuxième élément de guidage (360) présentant un cinquième diamètre (Ø₅) et le cinquième diamètre (Ø₅) étant supérieur ou égal à un diamètre maximal de la zone élastique (330).

4. Appareil de terrain selon la revendication 3,
pour lequel le filetage présente un sixième diamètre (Ø₆), et
pour lequel le cinquième diamètre (Ø₅) est supérieur au sixième diamètre (Ø₆).

5. Appareil de terrain selon au moins l'une des revendications précédentes, pour lequel l'élément de réception (110) est conçu partiellement en forme de tube présentant un septième diamètre (Ø₇), le septième diamètre (Ø₇) étant plus grand que le troisième diamètre (Ø₃), plus grand que le quatrième diamètre (Ø₄) et plus grand que le cinquième diamètre (Ø₅).

6. Appareil de terrain selon la revendication 5, pour lequel la première section d'extrémité (310) comprend un élément de butée (370) présentant un huitième diamètre (Ø₈), le huitième diamètre (Ø₈) étant plus grand que le septième diamètre (Ø₇).

7. Appareil de terrain selon la revendication 6, pour lequel l'élément de butée (370) présente un logement (371) pour la transmission du couple, notamment au moyen d'un tournevis ou d'une clé Allen, six pans ou Torx.

8. Appareil de terrain selon au moins l'une des revendications précédentes, pour lequel le col de capteur (200) présente une rainure périphérique (210) sur le côté orienté vers l'extérieur, la rainure (210) étant conçue pour recevoir la zone de contact (340) de l'élément de serrage (300) après insertion de l'élément de serrage (300) dans l'élément de réception (110), de sorte qu'un mouvement du col de capteur (200) dans la section tubulaire (100) du boîtier (1) dans la direction de l'axe de rotation (RA) est empêché mais qu'une rotation du col de capteur (200) dans la section tubulaire (100) du boîtier (1) autour de l'axe de rotation (RA) est permise, le filetage étant vissé à une deuxième profondeur prédéterminée dans le contre-filet, la première profondeur prédéterminée étant plus profonde que la deuxième profondeur prédéterminée.

9. Appareil de terrain selon la revendication 8, pour lequel la section tubulaire (100) du boîtier (1) présente dans la face intérieure au moins deux surfaces d'appui (121, 122), lesquelles sont notamment conçues comme des entretoises ou des nervures, les surfaces d'appui (121, 122) reposant chacune sur une zone du col de capteur (200) au-dessus et au-dessous de la rainure, les surfaces d'appui (121, 122) étant espacées l'une de l'autre d'une distance de 120° sur un périmètre de la section tubulaire (100).

10. Appareil de terrain selon la revendication 9, pour lequel les surfaces d'appui sont conçues de telle sorte que deux des surfaces d'appui (121, 122) exercent chacune une force de serrage radiale entre l'élément de réception (110) et le col de capteur (200) lors de l'exercice de la force de serrage dans la direction radiale entre la section tubulaire (100) du boîtier (1) et le col de capteur (200).

11. Appareil de terrain selon l'une des revendications 8 à 10, pour lequel le col de capteur (200) présente, en dessous de la zone sur laquelle reposent les surfaces d'appui (121, 122), un diamètre inférieur au deuxième diamètre (Ø₂).

12. Appareil de terrain selon au moins l'une des revendications précédentes, pour lequel l'élément de serrage (300) est fabriqué en un matériau métallique ou en une matière plastique, notamment en une matière plastique renforcée par des fibres ou des billes.

13. Appareil de terrain selon au moins l'une des revendications précédentes, pour lequel le boîtier (1) est fabriqué en un métal, notamment en aluminium ou en acier inoxydable, ou en une matière plastique.
